Europäisches Patentamt

**European Patent Office**

· **Office européen des brevets**

(11) Publication number: **0 156 059**
**B1**

## EUROPEAN PATENT SPECIFICATION

(45) Date of publication of patent specification: **16.03.88**

(21) Application number: **84305853.8**

(22) Date of filing: **28.08.84**

(51) Int. Cl.⁴: **C 02 F 9/00, C 02 F 1/52, C 02 F 1/76, C 02 F 1/70**

(54) Process for the detoxification treatment of hazardous wastes.

(30) Priority: **31.08.83 US 528031**

(43) Date of publication of application:
**02.10.85 Bulletin 85/40**

(45) Publication of the grant of the patent:
**16.03.88 Bulletin 88/11**

(84) Designated Contracting States:
**CH DE FR GB IT LI**

(56) References cited:
**FR-A-1 253 057
US-A-4 025 430
US-A-4 072 605**

**ENVIRONMENTAL SCIENCE & TECHNOLOGY,
vol. 12, no. 8, August 1978, pages 896-899,
American Chemical Society, US; M.
KIESZKOWSKI et al.: "A clean water project in
Poland"**

(73) Proprietor: **DEERE & COMPANY
1 John Deere Road
Moline Illinois 61265 (US)**

(72) Inventor: **Douglas, Gary Ray
444 Hughes Drive
Waterloo Iowa 50701 (US)**
Inventor: **Kusy, Paul Frank
11515-103 Ave. Ct
Coal Valley Illinois 61240 (US)**

(74) Representative: **Pears, David Ashley et al
REDDIE & GROSE 16 Theobalds Road
London WC1X 8PL (GB)**

## Description

The present invention relates to the treatment of liquid wastes which contain heavy metals and provides a process for producing a non-hazardous sludge from an aqueous solution which contains heavy metals. It is desirable and in many countries required by regulations, that waste containing lead, chromium, cadmium, arsenic, mercury, selenium, silver or barium leach only minimum concentrations of these metals to be legally defined as non-hazardous.

In the United States, the Extraction Procedure (EP) toxicity test has been established to determined compliance with the leachable metal concentration allowances. This test is described in 40 Code of Federal Regulations (C.F.R.) § 261, Appendix II. Wastes that fail the EP toxicity test are hazardous and must be disposed of in stipulated facilities. This can be difficult and expensive. Therefore, a process that removes and retards metals leachability ensuring that hazardous wastes are rendered non-hazardous would be a benefit to current waste management options.

Existing processes to reduce chemical mobility in wastes are mostly encapsulation processes, whereby various encapsulants are added to the waste, (i.e., liquids or semi-solids) to turn the waste into a solid. Examples of such encapsulants are cement and sodium silicate, asphalt glass, and various polymers and chemicals. Emphasis is placed on creating a hard solid mass which water cannot penetrate. Encapsulation processes are used as final wastewater treatment steps to render sludges and liquids non-leachable. Unfortunately, encapsulation processes tend to be expensive and often greatly increase the amount of material for disposal, and may be subject to leaching if the encapsulated seal later fails.

US—A—4 072 605 (Thelander) relates to a process for removal by precipitation from aqueous solutions of the salts of metals including copper, chromium, zinc, nickel, lead, tin, platinum and rhodium so that the aqueous media may be disposed of the process using phosphite and halogen to set up a redox cycle.

Moreover, traditional heavy metals bearing wastewater treatments use lime or NaOH to precipitate the metals. Thus, metal hydroxides are precipitated, which hydroxides have a comparatively high solubility. Certain of the hydroxides are also amphoteric, i.e., soluble at low and high pH.

Generally, the pH of treatment solutions must be maintained between about 6 and 10 to achieve maximum metal hydroxide insolubility. Furthermore, even after precipitation, the resulting sludge may not pass the EP toxicity test.

Therefore, a need exists for a process for treating liquid waste which contains heavy metals, which process results in the production of a non-hazardous sludge which can be disposed of in a landfill, and a liquid with the heavy metals content having been reduced to levels acceptable for discharge into existing sewer systems.

The present invention is characterised by the steps of: [a] adding phosphoric acid or an acid phosphate salt to the aqueous solution to precipitate the heavy metals; [b] lowering the pH of the solution to less than about 5.0; [c] adding a coagulant to the solution; [d] raising the pH of the solution to above about 7.0 by the addition of a calcium source adapted to reverse the pH reduction; and [e] dewatering the resulting non-hazardous sludge.

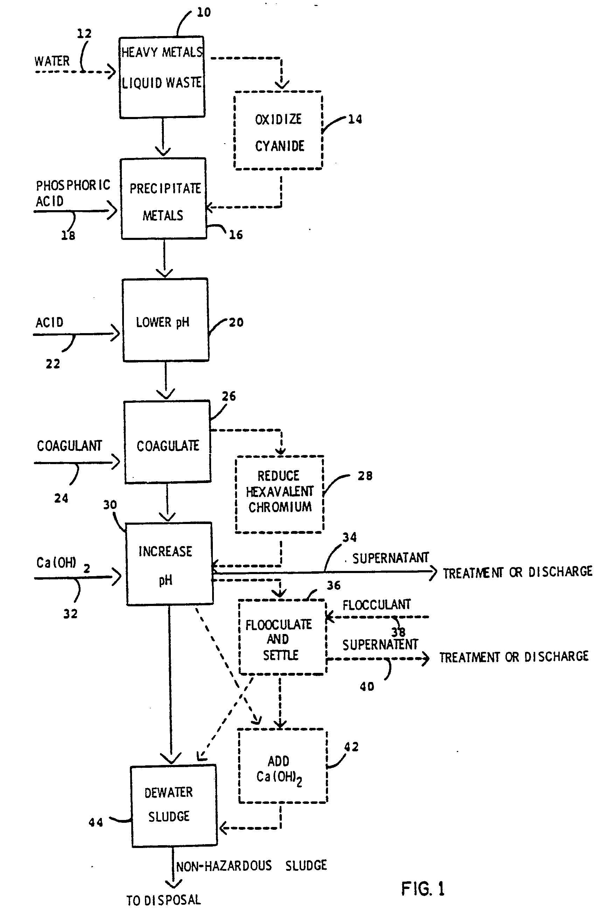

Fig. 1 is a flowsheet of the process of the present invention.

As stated above, the present invention relates to a process for producing a non-hazardous sludge from an aqueous solution which contains heavy metals. By non-hazardous is meant that the sludge obtained from the process has a leachability of less than that specified in the United States Resource Conservation Recovery Act regulations when tested according to the test set forth in 40 C.F.R. § 261, Appendix II. The current standards for the eight metals listed therein are:

| Metal | Concentration in ppm |
|-------|----------------------|
| Pb | 5 |
| Cr | 5 |
| Cd | 1 |
| As | 5 |
| Hg | 0.2 |
| Se | 1 |
| Ag | 5 |
| Ba | 100 |

In addition to those metals specifically set forth in the regulations, various other metals are often present in heavy metal waste solutions including zinc, copper, and nickel. These metals will also be effectively treated by the present process.

The process of the present invention differs from the conventional processes of the prior art at least in that the present process is made a part of the wastewater treatment sequence. No attempt is made to encapsulate or solidify the sludge or liquids. Rather, the necessary reagents are added as a part of the wastewater treatment process. The process of the present invention is suitable for various types of liquid wastes. These include painting wastes, electroplating wastes, and even waste streams containing high concentrations of heavy metals, e.g., lead at 60,000 mg/l, provided that the wastewater is not highly contaminated with oil or grease.

One of the most important aspects of the present invention is the precipitation of the metal content by the use of phosphoric acid or acid phosphate salt to form metal phosphates. At least for the metals listed above, the metal phosphates are generally much more insoluble than the corresponding metal hydroxides or sulfates. Moreover, metal phosphates are not amphoteric. This combination of lower metals solubilities and the lack of amphoteric character provides the necessary chemistry which allows the production of a non-hazardous sludge, whereas the sludge from wastes treated with lime, alkali sulfate or sulfide to precipitate the heavy metals is hazardous.

The process of the present invention is more readily explained by reference to the flowchart of Fig. 1. In Fig. 1, optional steps are set forth by broken lines.

Heavy metals liquid waste 10 may be treated as received, or if necessary, additional water 12 can be added to dilute waste 10 to make it easier to process. Preferably, the solids content of waste 10 should not be greater than about 20% by weight.

If waste 10 contains a source of cyanide ion, it is preferably passed to cyanide oxidation step 14 prior to addition of phosphoric acid or acid phosphate salt. The cyanide oxidation can be performed by any of the various methods well known in the art. Preferably, the cyanide oxidation is performed by alkaline chlorination using an oxidizing agent such as sodium hypochlorite to convert the cyanide and the nitrogen gas. If the pH of waste 10 is about 10 or above, no base need be added. If addition of a base is necessary, a preferred base is sodium hydroxide. Alkaline conditions are used to prevent the release of hydrogen cyanide gas. Typical treatment times are between about 45 minutes and an hour. The addition of oxidizing agent is continued until chlorine ion is detected at the end of the treatment period. Chlorine concentrations in excess of 100 ppm are not detrimental to the process, the oxidation being continued until the oxidation-reduction potential stabilizes.

The next step in the process is the metals precipitation step 16 which is accomplished by the addition of phosphoric acid 18 or an acid phosphate salt. Phosphoric acid 18 also tends to neutralize the solution. While not preferred, acid phosphate salts can be used, such as mono- or dihydrogen ammonium phosphate. However, acid phosphate salts of metals should typically be avoided since they add to the cations in solution. At least a sufficient amount of phosphoric acid 18 is added to provide a stoichiometric amount of phosphate to precipitate all the metals. Preferably, this amount will be between one and two times the stoichiometric amount (i.e., one to two mols of phosphate per mol of metals). Although even greater amounts may be used, care must be taken not to add so much that a buffering effect is seen. After phosphoric acid is complete, the mixture is preferably blended for about 15 to 30 minutes before proceeding to the next step.

The next step is pH lowering step 20 which is accomplished by the addition of acid 22. While various acids such as phosphoric acid or hydrochloric acid can be used as acid 22, it is preferred to use sulfuric acid since subsequent steps then result in neutralization to sulfate.

The amount by which the pH is lowered depends upon whether waste 10 includes hexavalent chromium metal. If no hexavalent chromium is present, then the pH in pH lowering step 20 need only be reduced sufficiently for coagulant 24 to function effectively in coagulating step 26. For example, a preferred coagulant 24 is ferric chloride which precipitates as ferric hydroxide at a pH of about 5.0—5.5. The pH will thus vary depending on the coagulant 24 used.

If waste 10 contains hexavalent chromium, the pH is preferably reduced to about 3.0 to facilitate hexavalent chromium reduction step 28, described further below.

If ferric chloride is used as coagulant 24, it is preferably used at between about 0.75 and about 1.5 g/l. Stirring is typically continued for about 3—5 minutes during which time coagulation occurs.

After coagulation step 26, hexavalent chromium reduction step 28 is preferably performed, although, if desired, it can be performed prior to coagulation step 26. Chromium reduction step 28 can be performed using any of various well known reducing agents, preferred agents being sodium metabisulfite, sulfur dioxide, and sodium sulfate. The reducing agent is added in an amount at least sufficient to reduce all hexavalent chromium present, typically an excess of about 10%, since stirring is continued until the reduction is complete as evidence by stabalization of the oxidation-reduction potential.

The next step is pH increasing step 30. In this step, a calcium source such as calcium hydroxide 32 is added to increase the pH at least about 7, and more preferably to a pH of at least about 8.5. By calcium source is meant material such as calcium hydroxide, calcium carbonate, or limestone. However, calcium hydroxide is much preferred because limestone may introduce other cations, and both calcium carbonate and limestone may result in the production of carbon dioxide gas when added to acid solution. Such gas evolution would generally adversely affect the process. The addition of a calcium source has several beneficial effects, including that any excess sulfuric acid and phosphoric acid used in previous steps will now be precipitated as calcium sulfate and calcium phosphate.

Although not preferred, the mixture can simply be allowed to settle for one to two hours, followed by passage of supernatant 34 to discharge or further treatment, e.g., removal of other ions. More preferably, after pH increase step 30, the mixture is treated by flocculation step 36 in which a flocculant 38 is added before the mixture is allowed to settle. Various flocculants are well known to those skilled in the art, preferred flocculants being anionic polymers.

Representative of such anionic polymers are a material sold by Drew Chemical Corp. under the tradename DREWFLOC 270, a material sold by Allied Chemical Corp. under the tradename of CLARIFLOC A205P and a material sold by Nalco Chemical Co. under the name of NALCO 7711.

The flocculant is typically added at between about 5 ppm and about 100 ppm. The amount used depending on the solids concentration in waste 10 and the nature of the solids.

After allowing the mixture to settle for about 1 to 2 hours, supernatant 40 is discharged or passed to further treatment.

Depending upon the concentration of metals in waste 10, the sludge from pH increasing step 30 of flocculation step 36 may need to be mixed with additional calcium hydroxide or other calcium source in calcium hydroxide addition step 42 prior to dewatering step 44. Typically, between about 15% and 25% by weight of calcium hydroxide on a dry weight solids basis will be added and mixed thoroughly prior to dewatering. If the metals concentration in waste 10 does not exceed about 500 ppm, calcium hydroxide addition step 42 will generally not be needed.

Dewatering step 44 can be performed on any apparatus well known to those skilled in the art, vacuum filtering being preferred. The water content will typically be reduced to about 50—55% by weight.

The resulting sludge is non-hazardous as defined above and can be disposed of in an ordinary sanitary landfill. The metal within the sludge is bound so tightly that it is not released by the environment of such landfills.

All of the steps described above are typically performed at ambient temperature. However, other temperatures can be used if desired, provided they do not adversely affect the process.

To obtain a more complete understanding of the present invention, the following example is set forth. However, it should be understood that the invention is not limited to the specific details set forth in the following example.

Example

The process of the present invention is performed on 100 ml of an aqueous solution containing the following concentrations of metals (in parts per million):

| Metal | Concentration (ppm) |
|-------|---------------------|
| Zn | 1500 |
| Pb | 10000 |
| Cr | 3000 |
| Cd | 40 |
| Cu | 20 |
| Ni | 60 |

To the aqueous solution is added about 700 ml of water. The solution is stirred for about 3 minutes, after which 2—4 ml of concentrated (75%) $H_3PO_4$ is added with stirring to precipitate the metals. Stirring is continued for about 30 minutes after $H_3PO_4$ addition, followed by the addition of 10 ml of concentrated sulfuric acid to reduce the pH to about 3.0, and then the·addition of 1.2 g of ferric chloride (1500 mg/l).

After coagulation is complete, 5—20 g of $Na_2S_2O_5$ are added, and stirring is continued for about 10 minutes, followed by the addition of 20—10 g of calcium hydroxide which raises the pH to about 8.5. Subsequent to calcium hydroxide addition, 10—40 mg of an anionic polymer flocculant sold under the tradename DREWFLOC 270 by Drew Chemical Corp. is added with stirring, and the mixture allowed to stand for one hour, after which the supernatant is decanted, and the sludge is recovered.

The supernatant contains the following concentrations of metals.

| Metal | Concentration (ppm) |
|-------|---------------------|
| Zn | 0.45 |
| Pb | 1 |
| Cr | 2 |
| Ni | 1 |
| Cu | 0.2 |
| Cd | 0.1 |

The sludge is dewatered and tested in accordance with the EP toxicity test of 40 C.F.R. § 261, Appendix II and found to leach the following concentrations of metals:

| Metal | Concentration (ppm) |
|-------|---------------------|
| Zn | 1 |
| Pb | 2 |
| Cr | 3 |
| Ni | 0.21 |
| Cu | 0.02 |
| Cd | 0.02 |

All of the above fall within acceptable limits.

The same procedure without the phosphate precipitation results in a sludge leaching the following concentrations of metals when tested in the same manner:

| Metal | Concentration (ppm) |
|-------|---------------------|
| Zn | 43.4 |
| Pb | 70.5 |
| Cr | 6.5 |
| Ni | 5 |
| Cu | 0.05 |
| Cd | 0.04 |

## Claims

1. A process for producing a non-hazardous sludge from an aqueous solution which contains heavy metals, characterised by steps of:

(a) adding phosphoric acid or an acid phosphate salt to the aqueous solution to precipitate the heavy metals;

(b) lowering the pH of the solution to less than 5.0;

(c) adding a coagulant to the solution;

(d) raising the pH of the solution to above 7.0 by the addition of a calcium source adapted to reverse the pH reduction; and

(e) ·dewatering the resulting non-hazardous sludge.

2. The process of claim 1, characterised in that in step (a) at least about 1 mol of phosphate is added per mol of heavy metals in the solution.

3. The process of claim 2, characterised in that between 1 and 2 mols of phosphate are added per mol of heavy metals in the solution.

4. The process of claim 1, 2 or 3, characterised in that in step (b) the pH is lowered by the addition of sulfuric acid.

5. The process of any of claims 1 to 4, characterised in that the step (b) the pH is lowered to about 3.0.

6. The process of any of claims 1 to 5, characterised in that in step (c) the coagulant is ferric chloride.

7. The process of claim 6, characterised in that the ferric chloride is added at about 0.75 and 1.5 g per litre.

8. The process of any preceding claim, characterised in that in step (d), the pH is raised by adding calcium hydroxide.

9. The process of any preceding claim, characterised in that in step (d), the pH is raised to at least 8.5.

10. The process of any preceding claim, characterised in that the aqueous solution also contains cyanide ions, and a cyanide oxidation step is performed prior to step (a).

11. The process of claim 10, characterised in that the cyanide oxidation step is performed by the addition of sodium hypochlorite and sodium hydroxide.

12. The process of any preceding claim, characterised in that the heavy metals include hexavalent chromium, and a hexavalent chromium reduction step is performed between step (b) and step (d).

13. The process of claim 12, characterised in that, the reduction is performed by adding sodium metabisulfite.

14. The process of any preceding claim, characterised in that a flocculant is added subsequent to step (d).

15. The process of claim 14, characterised in that the flocculant is an anionic polymer.

16. The process of any preceding claim, characterised in that calcium hydroxide is added to the sludge prior to step (e).

17. The process of claim 16, characterised in that the calcium hydroxide is added to the sludge at between 15% and 25% by weight.

## Patentansprüche

1. Verfahren zum Herstellen eines nicht-lebensgefährlichten Schlamms aus einer wässrigen Lösung, die Schwermetalle enthält, gekennzeichnet durch die Schritte, daß

(a) Phosporsäure oder ein saures Phosphorsalz der wässrigen Lösung zugefügt wird, um die Schwermetalle auszufällen;

(b) der pH-Wert der Lösung auf unter 5,0 abgesenkt wird;

(c) der Lösung ein Koagulans zugefügt wird;

(d) der pH-Wert der Lösung durch Beigabe einer Kalziumquelle auf über 7,0 angehoben wird, um die pH-Verringerung umzukehren; und

(e) der nicht-lebensgefährliche Schlamm entwässert wird.

2. Verfahren nach Anspruch 1, dadurch gekennzeichnet, daß in Schritt (a) wenigstens etwa 1 Mol an Phosphat pro Mol der Schwermetalle in der Lösung zugegeben wird.

3. Verfahren nach Anspruch 2, dadurch gekennzeichnet, daß zwischen 1 und 2 Mols an Phosphaten pro Mol an Schwermetallen der Lösung beigegeben werden.

4. Verfahren nach Anspruch 1, 2 oder 3, dadurch gekennzeichnet, daß in Schritt (b) der pH-Wert durch Beigabe von Schwefelsäure herabgesetzt wird.

5. Verfahren nach irgendeinem der Ansprüche 1 bis 4, dadurch gekennzeichnet, daß in Schritt (b) der pH-Wert auf etwa 3,0 abgesenkt wird.

6. Verfahren nach irgendeinem der Ansprüche 1 bis 5, dadurch gekennzeichnet, daß das Koagulans nach Schritt (c) Eisenchlorid ist.

7. Verfahren nach Anspruch 6, dadurch gekennzeichnet, daß das Eisenchlorid zwischen 0,75 und 1,5 g pro Liter zugefügt wird.

8. Verfahren nach irgendeinem der Voranstehenden Ansprüche, dadurch gekennzeichnet, daß in Schritt (d) der pH-Wert durch Zugabe von Kalziumhydroxid angehoben wird.

9. Verfahren nach jedem voranstehenden Anspruch, dadurch gekennzeichnet, daß in Schritt (d) der pH-Wert mindestens auf 8,5 angehoben wird.

10. Verfahren nach irgendeinem der voranstehenden Ansprüche, dadurch gekennzeichnet, daß die wässrige Lösung auch Zyanid-Ionen enthält und ein Zyanid-Oxidations-Schritt vor dem Schritt (a) eingefügt wird.

11. Verfahren nach Anspruch 10, dadurch gekennzeichnet, daß der Zyanid-Oxidations-Schritt durch Beigabe von Natriumhypochlorit und Natriumhydroxid ausgeführt wird.

12. Verfahren nach irgendeinem der voranstehenden Ansprüche, dadurch gekennzeichnet, daß die Schwermetalle sechswertiges Chrom enthalten und ein das sechswertige Chrom reduzierender Schritt zwischen dem Schritt (b) und Schritt (d) ausgeführt wird.

13. Verfahren nach Anspruch 12, dadurch gekennzeichnet, daß die Reduzierung durch Beigabe von Natriumdisulfit ausgeführt wird.

14. Verfahren nach irgendeinem der voranstehenden Ansprüche, dadurch gekennzeichnet, daß anschließend an den Schritt (d) ein Ausflockungsmittel beigegeben wird.

15. Verfahren nach Anspruch 14, dadurch gekennzeichnet, daß das Ausflockungsmittel ein anionisches Polymer ist.

16. Verfahren nach irgendeinem der voranstehenden Ansprüche, dadurch gekennzeichnet, daß das Kalziumhydroxid dem Schlamm vor dem Schritt (e) beigegeben wird.

17. Verfahren nach Anspruch 16, dadurch gekennzeichnet, daß das Calziumhydroxid dem Schlamm in Mengen zwischen 15 Gew.-% und 25 Gew.-% beigegeben wird.

**Revendications**

1. Procédé pour produire une boue inoffensive à partir d'une solution aqueuse qui contient des métaux lourds, caractérisé par les étapes suivantes:

(a) on ajoute de l'acide phosphorique ou un phosphate acide à la solution aqueuse pour faire précipiter les métaux lourds;

(b) on abaisse le pH de la solution à moins de 5,0;

(c) on ajoute un coagulant à la solution;

(d) on élève le pH de la solution au-delà de 7,0 en ajoutant une source de calcium adaptée pour inverser la réduction du pH; et

(e) on deshydrate la boue inoffensive résultante.

2. Procédé suivant la revendication 1, caractérisé en ce que dans l'étape (a), on ajoute au moins environ une mole de phosphate par mole de métaux lourds dans la solution.

3. Procédé suivant la revendication 2, caractérisé en ce qu'on ajoute entre 1 et 2 moles de phosphate par mole de métaux lourds dans la solution.

4. Procédé suivant la revendication 1, 2 ou 3, caractérisé en ce que dans l'étape (b), on réduit le pH en ajoutant de l'acide sulfurique.

5. Procédé suivant l'une quelconque des revendications 1 à 4, caractérisé en ce que dans l'étape (b) on réduit le pH à environ 3,0.

6. Procédé suivant l'une quelconque des revendications 1 à 5, caractérisé en ce que dans l'étape (c), le coagulant est du chlorure ferrique.

7. Procédé suivant la revendication 6, caractérisé en ce qu'on ajoute le chlorure ferrique à raison de 0,75 à 1,5 g par litre.

8. Procédé suivant l'une quelconque des revendications précédentes, caractérisé en ce que dans l'étape (d), on élève le pH en ajoutant de l'hydroxyde de calcium.

9. Procédé suivant l'une quelconque des revendications précédentes, caractérisé en ce que dans l'étape (d), on élève le pH à au moins 8,5.

10. Procédé suivant l'une quelconque des revendications précédentes, caractérisé en ce que la solution aqueuse contient aussi des ions cyanure et qu'on effectue une étape d'oxydation du cyanure avant l'étape (a).

11. Procédé suivant la revendication 10, caractérisé en ce qu'on effectue l'étape d'oxydation du cyanure en ajoutant de l'hypochlorite de sodium ou de l'hydroxyde de sodium.

12. Procédé suivant l'une quelconque des revendications précédentes, caractérisé en ce que les métaux lourds comprennent du chrome hexavalent et qu'on effectue une étape de réduction du chrome hexavalent entre l'étape (b) et l'étape (d).

13. Procédé suivant la revendication 12, caractérisé en ce qu'on effectue la réduction en ajoutant du métabisulfite de sodium.

14. Procédé suivant l'une quelconque des revendications précédentes, caractérisé en ce qu'on ajoute un floculant après l'étape (d).

15. Procédé suivant la revendication 14, caractérisé en ce que le floculant est un polymère anionique.

16. Procédé suivant l'une quelconque des revendications précédentes, caractérisé en ce qu'on ajoute de l'hydroxyde de calcium à la boue avant l'étape (e).

17. Procédé suivant la revendication 16, caractérisé en ce qu'on ajoute l'hydroxyde de calcium à la boue à raison de 15% à 25% en poids.

FIG. 1